# EUROPÄISCHE PATENTSCHRIFT

(11) **EP 1 286 021 B1**
(45) Veröffentlichungstag und Bekanntmachung des Hinweises auf die Patenterteilung: **27.10.2010**
(21) Anmeldenummer: 02405683.0
(22) Anmeldetag: 09.08.2002
(51) Int. Cl.: F01D 11/00, F16J 15/08, B23P 13/00

(54) **Verfahren zur Herstellung einer nutförmigen Ausnehmung sowie eine diesbezügliche nutförmigen Ausnehmung**
Method of making a groove-like recess and relevant groove-like recess
Procédé de fabrication d' un évidement ayant la forme d' une rainure et évidement ayant la forme d' une rainure correspondant

(30) Priorität: 21.08.2001 CH 15482001
(43) Veröffentlichungstag der Anmeldung: 26.02.2003
(73) Patentinhaber: Alstom Technology Ltd, 5400 Baden (CH)
(72) Erfinder: Florjancic, Stefan Dr., 5507 Mellingen (CH); Rathmann, Ulrich, 5400 Baden (CH)

(56) Entgegenhaltungen:
- US-A- 3 752 598
- US-A- 4 549 058
- US-A- 5 154 577
- US-A- 5 655 876

## Beschreibung

### Technisches Gebiet

Die Erfindung bezieht sich auf ein Verfahren zur Herstellung einer nutförmigen Ausnehmung, die Bestandteil einer Streifendichtung zwischen zwei einen Dichtspalt einschließenden Komponenten ist, unter Verwendung einer materialabtragenden Verfahrenstechnik zur Schaffung der nutförmigen Ausnehmung in beiden Komponenten derart, dass sich die nutförmige Ausnehmung der jeweils beiden Komponenten nach gegenseitiger Ausrichtung in einer den Zwischenspalt miteinander einschließenden Endstellung weitgehend gegenüberstehen, und dass ein Streifenelement in die nutförmigen Ausnehmungen derart einbringbar ist, dass das Streifenelement in beide nutförmigen Ausnehmungen wenigstens teilweise hineinragt und bei einer Krafteinwirkung mit den nutförmigen Ausnehmungen beider Komponenten eine weitgehend gasdichte Fügung eingeht. Ferner wird eine diesbezügliche nutförmige Ausnehmung als Bestandteil einer Streifendichtung beschrieben.

### Stand der Technik

Streifendichtungen der vorstehend genannten Gattung werden in besonderem Maße in der Gasturbinentechnik eingesetzt, um Leckageströme, die sich durch den Zwischenspalt zweier unmittelbar benachbart angeordneter Komponenten einstellen, vorzugsweise vollständig zu unterbinden.

Die nachfolgenden Ausführungen beziehen sich auf einen konkreten Anwendungsfall einer Streifendichtung innerhalb einer Gasturbine, doch sei an dieser Stelle angemerkt, dass Streifendichtungen in vielfachen anderweitigen Einsatzbereichen Anwendung finden, auf die die folgenden Ausführungen durchaus übertragen werden können.

Aus der US 5,531,457 geht eine Streifendichtungsanordnung hervor, die zur Abdichtung zweier benachbarter Gasturbinenschaufeln dient, um das Volumen des Heissgaskanals gegenüber einem sich unterhalb der Schaufelfüße befindlichen Kühlluftvolumen gasdicht abzugrenzen. Die in einer Vielzahl längs in Umfangsrichtung einer Rotor- bzw. Statoranordnung angeordneten Lauf- bzw. Leitschaufeln ragen zur Befestigung mit ihren Schaufelfüßen in sogenannte Befestigungsnuten ein und nehmen hierdurch eine feste Relativlage zu den jeweils benachbart angeordneten Gasturbinenschaufeln ein. Zu Kühlzwecken werden die einzelnen Gasturbinenschaufeln mit hochverdichteter Kühlluft, die zumeist über Bypass-Leitungen von der Verdichterstufe der Gasturbinenanlage abgezweigt wird, von Seiten ihrer Schaufelfüße versorgt. Der größte Teil der zugeführten Zuluft gelangt dabei in ein Kühlkanalsystem, das innerhalb der Gasturbinenschaufel eingearbeitet ist und zur Kühllufteinspeisung Kühlkanalöffnungen im Bereich der jeweiligen Schaufelfüße vorsieht. Kühlluftverluste treten jedoch an jenen Stellen auf, an denen zwischen zwei längs einer Schaufelreihe benachbart angeordneten Gasturbinenschaufeln ein Zwischenspalt zwischen den vorzugsweise im Schaufelfussbereich aneinandergrenzenden Turbinenschaufeln besteht. Zwar ist es bekannt, dass durch derartige Zwischenspalte auftretende Leckage- oder Verlustströme durch Minimierung der Spaltbreite erheblich reduziert werden können, doch führt eine derart enge Passfügung zwischen zwei benachbarten Gasturbinenschaufeln zu mechanischen Zwängen, die insbesondere aufgrund der hohen thermischen Belastungen sowie den thermischen Materialausdehnungen mit großen Materialbeanspruchungen Verbunden sind.

Eine alternative, wirkungsvolle und zugleich materialschonende Abdichtung ist in der vorstehend genannten US 5,531,457, insbesondere in Fig. 3 dieses Patentes dargestellt und beschrieben. Hierbei sehen die Fußbereiche zweier benachbarter Turbinenschaufeln jeweils sich gegenüberliegende, nutförmige Ausnehmungen vor, in die ein Streifenelement beidseitig hineinragt, um einen Leckagestrom durch den zwischen beide Schaufelfüße eingeschlossenen Zwischenspalt wirkungsvoll zu reduzieren.

Die Herstellung derartiger nutförmiger Ausnehmungen erfolgt bisweilen mit an sich bekannten Erodiertechniken, mit denen die Einbringung sogenannter Stichnuten möglich ist. Grundsätzlich eigenen sich hierzu besonders bevorzugt funkenerosive Materialabtrageverfahren, insbesondere funkenerosive Senkverfahren, mit denen Stich- bzw. Senknuten nahezu beliebiger Form und Größe in das Schaufelfußvollmaterial eingearbeitet werden können. Der Einsatz von Erodierverfahren führt zu einer hochwertigen Oberflächenqualität innerhalb der mit dem Verfahren hergestellten nutförmigen Ausnehmung, die wesentlich zur gasdichten Abdichtung mittels des in der Ausnehmung eingefügten Streifenelementes beiträgt. Nachteilig an derartigen Erodierverfahren ist jedoch der für die Herstellung der über eine hohe Oberflächenqualität verfügenden Dichtnuten erforderliche sehr große Zeitaufwand, der sich besonders bei einer industriellen Massenanfertigung kostenintensiv stark auswirkt.

Zwar sind auch alternative Materialabtrageverfahren bekannt, wie beispielsweise das Schleifen, durch das ebenfalls gute Oberflächenqualitäten innerhalb der durch den Schleifprozess herstellbaren nutförmigen Ausnehmung möglich sind jedoch, können Schleifverfahren nur an längsseits geöffneten Nuten mit einem freien Nutauslauf eingesetzt werden. Senk- bzw. Stichnutverläufe sind daher mittels bloßer Schleifverfahren nicht herstellbar. Überdies sind die Möglichkeiten für unterschiedliche Formgebungen hinsichtlich der Innenkontur in der nutförmigen Ausnehmung bzw. Dichtnut mittels Schleifen sehr begrenzt.

Aus der US 5,154,577 geht eine dreiteilige Streifendichtungsanordnung hervor, die zur Abdichtung zweier benachbarter Gasturbinenschaufeln dient, um das Volumen des Heissgaskanals gegenüber einem Kühlluftvolumen gasdicht abzugrenzen. Die Nuten, in denen die Streifendichtungen eingebracht werden, werden mittels Funkenerodieren (EDM), elektrochemischem Abtragen (ECM) oder Schleifen hergestellt.

Die US 5,154,577 offenbart ein Verfahren zur Herstellung einer nutförmigen Ausnehmung, sowie eine nutförmige Ausnehmung nach den Oberbegriffen der Ansprüche 1 bzw 13.

### Darstellung der Erfindung

Es besteht die Aufgabe, ein Verfahren zur Herstellung einer nutförmigen Ausnehmung, die Bestandteil einer Streifendichtung zwischen zwei einen Dichtspalt einschließenden Komponenten ist, derart mit einem materialabtragenden Verfahren herzustellen, dass zum einen eine für eine gewünschte gasdichte Abdichtung erforderliche hohe Oberflächenqualität an der Nutoberfläche erzielt werden kann, zum anderen durch das eingesetzte materialabtragende Verfahren auch eine industrielle Massenfertigung mit deutlich reduzierten Herstellkosten, d.h. mit deutlich geringeren Prozesszeiten, möglich wird.

Ferner gilt es eine nutförmige Ausnehmung anzugeben, die den vorstehenden Forderungen genügt und die insbesondere über eine optimierte Dichtwirkung verfügt.

Die Lösung der, der Erfindung zugrundeliegenden Aufgabe ist Gegenstand des Anspruches 1. Anspruch 13 bezieht sich auf eine erfindungsgemäß ausgebildete nutförmige Ausnehmung als Bestandteil einer Streifendichtung, die in der Verwendungsweise gemäß den Ansprüchen 15 und 16 bei Strömungsmaschinen, insbesondere Gasturbinenanlagen eingesetzt wird.

Erfindungsgemäß ist ein Verfahren zur Herstellung einer nutförmigen Ausnehmung gemäß des Oberbegriffes des Anspruches 1 derart ausgebildet, dass die materialabtragende Verfahrenstechnik in wenigstens zwei aufeinanderfolgenden Schritten durchgeführt wird, bei der in einem ersten Schritt Material mit einer ersten Materialabtragungsrate und in einem nachfolgenden zweiten Schritt Material mit einer zweiten Materialabtragungsrate abgetragen wird, und dass die erste Materialabtragungsrate größer als die zweite ist. In Abkehr zur bisher bekannten Herstellungsweise einer in eine Komponente einzubringenden nutförmigen Ausnehmung, die Teil einer Streifendichtung ist, bei der die nutförmige Ausnehmung mit Hilfe eines, eine hohe Nutoberflächenqualität erzeugenden Erodierverfahrens gewonnen wird, wird erfindungsgemäß ein Materialabtrag in zwei Schritten durchgeführt, bei dem in einem ersten Schritt durch sogenanntes Schruppen ein möglichst rascher Materialabtrag, durch den jedoch eine bearbeitete Oberfläche mit einer etwas geringeren Oberflächenqualität entsteht, die jedoch bewußt in Kauf genommen wird. Erst in einem darauffolgenden zweiten Schritt wird mittels eines Schlichtvorgangs Material innerhalb der bereits bestehenden nutförmigen Ausnehmung mit einem Materialabtrageverfahren abgetragen, das zwar eine geringere Materialabtragerate aufweist, jedoch zu einer weitaus höheren Oberflächenqualität führt, wie dies beispielsweise mit dem an sich bekannten Erodierverfahren der Fall ist.

Erfindungsgemäß ist erkannt worden, dass zur Vermeidung unnötig langer Prozesszeiten bei der Herstellung vorstehend genannter nutförmiger Ausnehmungen Material mit hohen Materialabtragungsraten in Nut-Bereichen abgetragen werden kann, die mit dem Streifenelement während der späteren Dichtwirkung nicht in Kontakt treten. Lediglich die Kontaktbereiche zwischen dem Streifenelement und der nutförmigen Ausnehmungen gilt es hochqualitativ, d.h. mit einer möglichst geringen Oberflächenrauhigkeit herzustellen, zumal jene Kontaktbereiche zur gasdichten Abdichtung entscheidend beitragen.

Grundsätzlich können alle Materialabtrageverfahren für die Materialschnellabtragung verwendet werden, so beispielsweise Fräsen, Schleifen oder auch erosive Schruppverfahren, mit denen in Abhängigkeit des Arbeitsstromes Abtrageraten von 600 Kubikmillimeter pro Minute und mehr für die Bearbeitung von Flächen mit geringerer Güte der Oberflächenqualität erreichbar sind.

Zur Materialabtragung im zweiten Verfahrensschritt, also zur Schaffung möglichst hoher Oberflächenqualitäten eignet sich besonders das erosive Schlichtverfahren, das entweder eine Feinbearbeitung einer bereits durch den vorangegangenen Materialabtragungsschritt hergestellten ersten Materialoberfläche ermöglicht, oder durch Materialneuabtrag neue Materialoberflächen mit besonders guten Materialoberflächenqualitäten erzeugt.

Selbstverständlich ist es möglich, mehr als zwei Verfahrensschritte zur Materialabtragung einzusetzen, die sich jeweils durch den Grad ihrer Materialabtragungsraten bzw. ihrer herstellbaren Oberflächenqualitäten unterscheiden. Vorteilhaft ist der beginnende Einsatz mit Materialabtrageverfahren, die eine möglichst hohe Materialabtragerate besitzen. In den weiteren Schritten werden anschließend Materialabtrageverfahren eingesetzt, die zunehmend bessere Materialoberflächenqualitäten zu erzeugen in der Lage sind.

Die mit dem Materialabtrageverfahren herstellbaren Nuttiefen sowie Nutbreiten und damit grundsätzlich die herstellbaren Nutformen sind insbesondere unter Verwendung erosiver Abtrageverfahren nahezu in beliebiger Größe und Gestalt auszuführen.

In besonders vorteilhafter Weise ist die Nutbreite der nutförmigen Ausnehmung selbst an ihrer engsten Stelle derart dimensioniert, dass die engste Stelle größer als die Dicke des Streifenelementes ist, so dass zur Herstellung einer Streifendichtung das Streifenelement beidseitig in beide gegenüberliegende nutförmige Ausnehmungen hineinragt. Das Streifenelement liegt hierbei nahezu frei beweglich innerhalb der sich gegenüberliegenden nutförmigen Ausnehmungen beider Komponenten. Erst durch Einwirken eines äußeren Kraftfeld auf das Streifenelement quer zu dessen Längserstreckung wird das Streifenelement gegen bestimmte Bereiche der Innenkontur der nutförmigen Ausnehmung, die sogenannten Kontaktbereiche, gepresst. Eben jene Kontaktbereiche sind mit einer besonders hohen Oberflächenqualität, d.h. einer möglichst geringen Oberflächenrauhigkeit, beschaffen. Alle übrigen Nutoberflächenbereiche können im Gegensatz dazu geringere Oberflächenqualitäten aufweisen.

Das vorstehende Kraftfeld, das auf das Streifenelement innerhalb der nutförmigen Ausnehmungen einwirkt, wird im vorstehenden Beispiel durch den radial zur Schaufelerstreckung vorherrschenden Druckunterschied zwischen dem Kühlvolumen und dem radialwärts zu den Schaufeln orientierten Heissgaskanal hervorgerufen. Zudem unterliegt das Streifenelement im Falle der Montage innerhalb der Schaufelfüße von Laufschaufeln in einer Rotoranordnung den an dem Streifenelement zusätzlich angreifenden Zentrifugalkräften, die sich zu der durch den Druckunterschied hervorgerufenen Kraft additiv überlagert.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a, b: schematisierte Querschnittsdarstellungen durch eine Streifendichtung zwischen zwei einem Dichtspalt einschließenden Komponenten (Stand der Technik),
- Fig. 2a-d: Querschnittsdarstellungen von erfindungsgemäß ausgebildeten nutförmigen Ausnehmungen innerhalb zweier sich gegenüberstehender Komponenten.

### Wege zur Ausführung der Erfindung, gewerbliche Verwendbarkeit

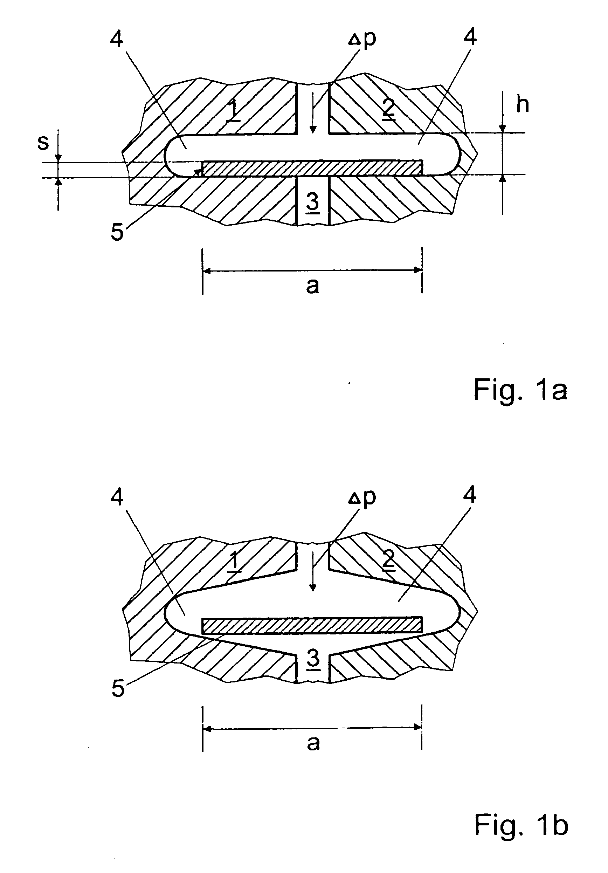

In den Figuren 1a und b ist jeweils eine an sich bekannte Streifendichtung zwischen zwei Komponenten 1 und 2 dargestellt.

Die in Fig. 1a und b dargestellten Querschnittsbilder zeigen zwei sich unmittelbar gegenüberstehende Komponenten 1, 2, die gemeinsam einen Dichtspalt 3 einschließen. In jede der beiden Komponenten 1, 2 ist jeweils eine nutförmige Ausnehmung 4 eingearbeitet, die sich in einer entsprechenden Endposition beider Komponenten 1, 2 vorzugsweise unmittelbar gegenüberliegen. In Ausführungsbeispiel gemäß Fig. 1a sind die beiden nutförmigen Ausnehmungen annähernd als rechteckförmige Senknuten ausgebildet. Die in Fig. 1b dargestellte Ausführungsform einer Streifendichtung weist hingegen V- bzw. trapezförmig ausgebildete nutförmige Ausnehmungen 4 auf.

Im Inneren der nutförmigen Ausnehmungen 4 ist ein als dünner Blechstreifen ausgebildetes Streifenelement 5 eingebracht, das durch eine externe Druckdifferenz Δp einseitig gegen die innere Kontur der nutförmigen Ausnehmungen 4 gepresst wird und mit dieser eine vorzugsweise gasdichte Fügung eingeht.

Um mögliche Fehlpositionierungen zwischen beiden Komponenten 1, 2 in Bezug auf die sich gegenüberliegenden nutförmigen Ausnehmungen 4 auszugleichen sowie möglicherweise durch thermische Ausdehnungen hervorgerufene Zwänge zwischen den einzelnen Komponenten 1, 2 zu vermeiden, ist die Nutbreite h vorzugsweise größer als die Dicke s des Streifenelementes 5 gewählt. Überdies ist die Nuttiefe jeder einzelnen nutförmigen Ausnehmung 4 möglichst groß zu wählen, so dass eine möglichst große Breite des Streifenelementes 5, die sogenannte Spannweite a, realisiert werden kann. Je größer die Spannweite a desto bessere Dichtwirkungen sowie Lebensdauern der gesamten Streifendichtung können erzielt werden.

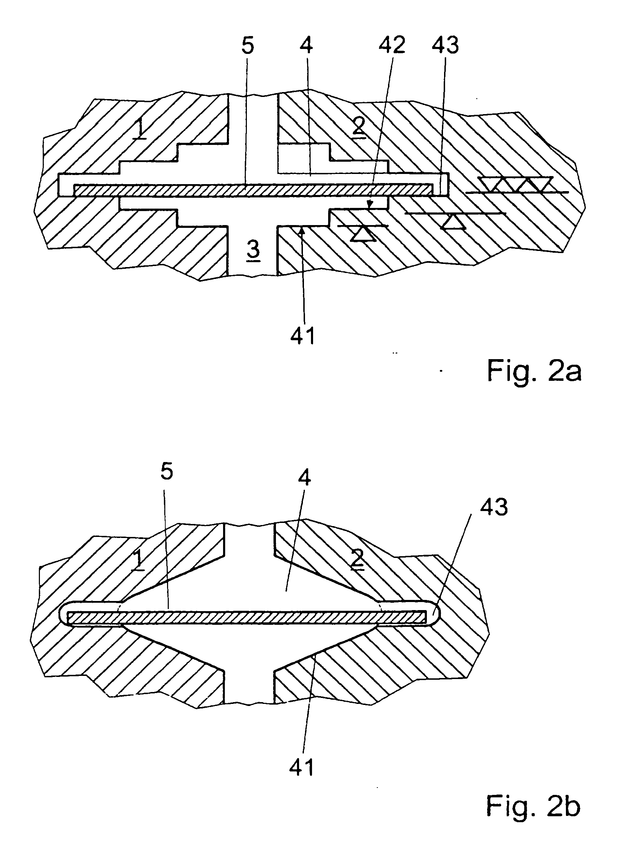

Fig. 2a zeigt den Querschnitt durch zwei Komponenten 1, 2 mit jeweils einer erfindungsgemäß ausgebildeten nutförmigen Ausnehmung 4. Die nutförmige Ausnehmung 4 weist einen mit zunehmender Nuttiefe stufenförmig ausgebildeten sich verengenden Querschnitt auf. Die Materialoberflächenbereiche 41 und 42 sind mit einem erosiven Schruppverfahren hergestellt worden und weisen jeweils an ihrer Materialoberfläche eine Oberflächenqualität von geringer bzw. normaler Güte auf. Der Materialoberflächenbereich 43 hingegen ist im Wege eines erosiven Schlichtverfahrens oder durch nachträgliches Glätten der Oberfläche mittels eines Umform- bzw. Prägeverfahrens hergestellt worden und verfügt infolgedessen über eine besonders glatte Oberfläche. Eben in diesem Materialoberflächenbereich 43 liegt zur gasdichten Abdichtung das Streifenelement 5 bündig auf.

Die Querschnittsdarstellung gemäß Fig. 2b zeigt eine vergleichbare Komponentenanordnung gemäß Fig. 2a, jedoch ist der V-förmige Materialoberflächenbereich 41 im Wege eines Schleifverfahrens hergestellt worden, mit dem ein möglichst hoher Materialabtrag erreichbar ist. Ferner weist die nutförmige Ausnehmung 4 einen tiefergehenden Nutbereich 43 auf, dessen innere Nutoberfläche über eine besonders hohe Oberflächenqualität verfügt. Der Nutbereich 43 ist wie vorstehend erwähnt, mit Hilfe eines Erodierverfahrens, vorzugsweise mittels erosiven Schlichten hergestellt worden. Eben in diesem Bereich liegt für eine spätere gasdichte Fügung das Streifenelement 5 auf, das über eine besonders große Spannweite und somit besonders gute Dichtwirkung verfügt.

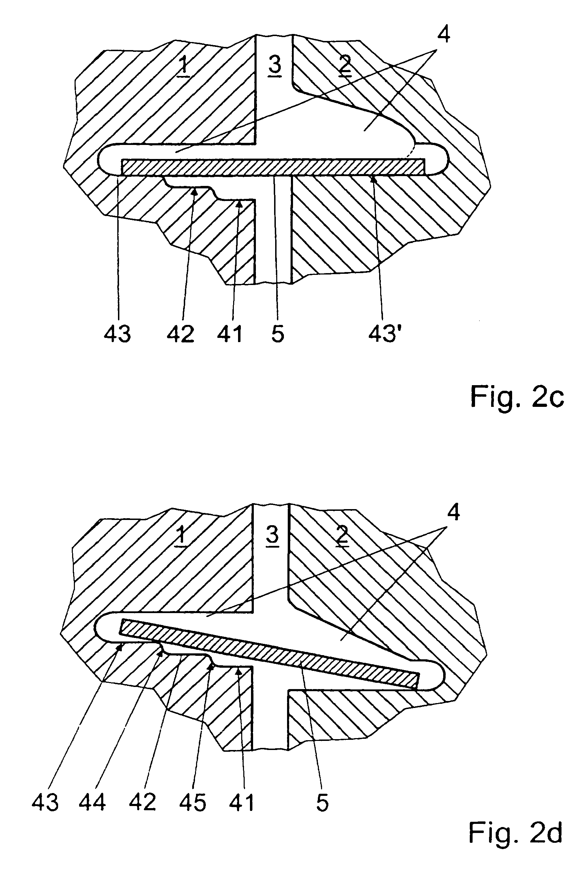

Im Unterschied zu den vorstehend in den Fig. 2a und b gezeigten Ausführungsbeispielen ist in Fig. 2c eine Querschnittsdarstellung durch beide Komponenten 1 und 2 mit einer jeweils unsymmetrisch zueinander ausgebildeten nutförmigen Ausnehmung 4 dargestellt. Die geometrische Ausbildung der nutförmigen Ausnehmung 4 hängt spezifisch von den innerhalb der Nut zu erwartenden Deformationen bzw. Toleranzvorgaben ab und können durchaus von einem symmetrischen Aufbau abweichen.

Auch die nutförmigen Ausnehmungen 4 in Fig. 2c sind in der vorstehend beschriebenen Weise ausgebildet. So verfügt die in Fig. 2c links dargestellte nutförmige Ausnehmung 4 im Materialoberflächenbereich 43 eine mittels Erodierverfahren hergestellte Materialoberfläche, auf der das Streifenelement 5 gasdicht aufliegt. Demgegenüber ist die gesamte Fläche 43' in der rechten in Fig. 2c dargestellten nutförmigen Ausnehmung 4 mit besonders hoher Oberflächenqualität im Wege eines Erodierverfahrens ausgebildet. Auch in diesem Fall kann die Herstellung der gewünschten Oberflächenqualität durch das Umformen mittels eines Stempels erfolgen. Bei Anwendung dieses Verfahrens kann durch einen Prägevorgang die Oberfläche geglättet und so die gewünschte Oberflächenqualität erzielt werden.

Alle übrigen Nutbereiche können hingegen verminderter Oberflächenqualitäten aufweisen und somit mit schnelleren Materialabtrageverfahren hergestellt werden. Diese können mittels Schleifen oder Schruppverfahren realisiert werden.

Ebenso ist in Fig. 2d eine Querschnittsdarstellung zweier unsymmetrisch zueinander ausgebildeter nutförmiger Ausnehmungen 4 innerhalb zwei sich gegenüberstehender Komponenten 1 und 2 dargestellt. Als besonders vorteilhaft hat es sich erwiesen, die Übergänge 44 und 45 zwischen zwei Materialbereichen 41, 42, 43, die mit jeweils unterschiedlichen Materialabtrageverfahren hergestellt worden sind, mittels abrasiver Verfahren abzurunden, vorzugsweise unter Verwendung von Sandstrahlen, Kugelstrahlen oder Hochdruckwasserstrahlen.

### Bezugszeichenliste

- 1, 2: Komponente
- 3: Zwischenspalt, Dichtspalt
- 4: Nutförmige Ausnehmung
- 41,42,43: Materialoberflächenbereiche
- 44,45: Übergangsbereiche
- 5: Streifenelement
- a: Spannweite
- h: Nutbreite
- s: Breite des Streifenelementes

## Patentansprüche

1. Verfahren zur Herstellung einer nutförmigen Ausnehmung (4), die Bestandteil einer Streifendichtung zwischen zwei einen Zwischenspalt (3) einschließenden Komponenten (1, 2) ist, mit einer materialabtragenden Verfahrenstechnik zur Schaffung der nutförmigen Ausnehmung (4) in beiden Komponenten (1, 2) derart, dass sich die nutförmige Ausnehmung (4) der jeweils beiden Komponenten (1, 2) nach gegenseitiger Ausrichtung in einer den Zwischenspalt (3) miteinander einschließenden Endstellung weitgehend gegenüberstehen, und dass ein Streifenelement (5) in die nutförmigen Ausnehmungen (4) derart einbringbar ist, dass das Streifenelement (5) in beide nutförmigen Ausnehmungen (4) wenigstens teilweise hineinragt und bei einer Krafteinwirkung mit den nutförmigen Ausnehmungen (4) beider Komponenten (1,2) eine weitgehend gasdichte Fügung eingeht,
**dadurch gekennzeichnet, dass** die materialabtragende Verfahrenstechnik in wenigstens zwei aufeinanderfolgenden Schritten durchgeführt wird, bei der in einem ersten Schritt Material mit einer ersten Materialabtragungsrate und in einem nachfolgenden zweiten Schritt Material mit einer zweiten Materialabtragungsrate abgetragen wird,
dass die erste Materialabtragungsrate größer als die zweite Materialabtragungsrate ist,
dass die materialabtragende Verfahrenstechnik gemäß des ersten Schrittes eine bearbeitete Materialoberflächenbereich (41) mit einer ersten Oberflächenrauhigkeit erzeugt,
dass die materialabtragende Verfahrenstechnik gemäß des zweiten Schrittes eine bearbeitete Materialoberflächenbereich (43) mit einer zweiten Oberflächenrauhigkeit erzeugt, und dass die zweite Oberflächenrauhigkeit kleiner als die erste ist.

2. Verfahren nach Anspruch 1,
**dadurch gekennzeichnet, dass** die materialabtragende Verfahrenstechnik gemäß des zweiten Schrittes zumindest zur Erzeugung von Materialoberflächenbereichen (43) innerhalb der nutförmigen Ausnehmung (4) eingesetzt wird, an denen das Streifenelement (5) mit den jeweiligen Komponenten (1,2) eine gasdichte Fügung eingeht.

3. Verfahren nach Anspruch 1 oder 2,
**dadurch gekennzeichnet, dass** die nutförmige Ausnehmung (4) eine Nuttiefe aufweist, längs der die nutförmige Ausnehmung (4) einen veränderlichen Querschnitt aufweist.

4. Verfahren nach Anspruch 3,
**dadurch gekennzeichnet, dass** der Querschnitt der nutförmigen Ausnehmung (4) mit zunehmender Nuttiefe kontinuierlich und/oder stufenweise kleiner wird.

5. Verfahren nach einem der Ansprüche 1 bis 3,
**dadurch gekennzeichnet, dass** als materialabtragende Verfahrenstechnik Schleifen, Fräsen, Erodieren, Laser- oder Wasserstrahlschneiden eingesetzt wird.

6. Verfahren nach einem der Ansprüche 1 bis 5,
**dadurch gekennzeichnet, dass** als materialabtragende Verfahrenstechnik gemäß des ersten Schrittes ein erosives Schruppverfahren und im zweiten Schritt ein erosives Schlichtverfahren angewendet wird.

7. Verfahren nach einem der Ansprüche 1 bis 6,
**dadurch gekennzeichnet, dass** als materialabtragende Verfahrenstechnik gemäß des ersten Schrittes ein Erodierverfahren und im zweiten Schritt ein Schleifverfahren angewendet wird.

8. Verfahren nach Anspruch 7,
**dadurch gekennzeichnet, dass** das Erodierverfahren auf der Funkenerosion beruht.

9. Verfahren nach einem der Ansprüche 1 bis 8,
**dadurch gekennzeichnet, dass** die nutförmige Ausnehmung (4) eine minimale Nutbreite aufweist, die größer ist als Dicke (s) des Streifenelementes (5) ist.

10. Verfahren nach einem der Ansprüche 1 bis 9,
**dadurch gekennzeichnet, dass** als Streifenelement (5) ein elastisch verformbarer Metallstreifen verwendet wird.

11. Verfahren nach einem der Ansprüche 1 bis 10,
**dadurch gekennzeichnet, dass** der Materialoberflächenbereich (41) mit der ersten Oberflächenrauhigkeit über einen Übergangsbereich (45) an den Materialoberflächenbereich (43) mit der zweiten Oberflächenrauhigkeit angrenzt, und dass der Übergangsbereich (45) mittels eines Materialoberflächenbearbeitungsverfahren abgerundet wird.

12. Verfahren nach Anspruch 11,
**dadurch gekennzeichnet, dass** als Materialoberflächenbearbeitungsverfahren Sand-, Kugel-, Hochdruckwasser-Strahlen, Prägen oder Umformen mittels eines Stempels eingesetzt wird.

13. Nutförmige Ausnehmung, die Bestandteil einer Streifendichtung zwischen zwei einen Zwischenspalt (3) einschließenden Komponenten (1,2) ist, in denen die nutförmige Ausnehmung (4) derart eingebracht ist, dass sich die nutförmige Ausnehmung (4) der jeweils beiden Komponenten (1, 2) nach gegenseitiger Ausrichtung in einer den Zwischenspalt (3) miteinander einschließenden Endstellung weitgehend gegenüberstehen, und in die ein Streifenelement (5) derart einbringbar ist, dass das Streifenelement (5) in beide nutförmigen Ausnehmungen (4) wenigstens teilweise hineinragt und bei einer Krafteinwirkung mit den nutförmigen Ausnehmungen (4) beider Komponenten (1,2) eine weitgehend gasdichte Fügung eingeht,
**dadurch gekennzeichnet, dass** die nutförmige Ausnehmung (4) wenigstens einen ersten Materialoberflächenbereich (41) mit einer ersten Oberflächenrauhigkeit sowie wenigstens einen zweiten Materialoberflächenbereich (43) mit einer zweiten Oberflächenrauhigkeit aufweist, und
dass die erste Oberflächenrauhigkeit geringer als die zweite Oberflächenrauhigkeit ist.

14. Nutförmige Ausnehmung nach Anspruch 13,
**dadurch gekennzeichnet, dass** der Materialoberflächenbereich (43) mit der zweiten Oberflächenrauhigkeit derart innerhalb der nutförmigen Ausnehmung (4) angeordnet ist, dass das Streifenelement (5) mit diesem Materialoberflächenbereich die gasdichte Fügung eingeht.

15. Verwendung der nutförmigen Ausnehmung (4) gemäß einem der Ansprüche 13 oder 14 zwischen zwei innerhalb einer Strömungsmaschine angeordneten Komponenten.

16. Verwendung nach Anspruch 15,
**dadurch gekennzeichnet, dass** die Strömungsmaschine eine Gasturbinenanlage ist.

17. Verwendung nach Anspruch 16,
**dadurch gekennzeichnet, dass** die Komponenten (1, 2) Gasturbinenschaufeln sind und die Streifendichtung zur Abdichtung des Heisskanals innerhalb einer Gasturbine gegen ein Kühlluftvolumen dient.

18. Verwendung nach Anspruch 17,
**dadurch gekennzeichnet, dass** das Streifenelement (5) durch einen innerhalb des Kühlvolumens herrschenden Überdruck gegenüber den im Heisskanal herrschenden Druckverhältnissen innerhalb der nutförmigen Ausnehmung (4) gegen die jeweilige Komponente (1, 2) gasdicht gepresst wird.

## Claims

1. Process for producing a groove-like recess (4) which is part of a strip seal between two components (1, 2) which enclose a gap (3), using a material-removing process technology to create the groove-like recess (4) in the two components (1, 2) in such a manner that the groove-like recess (4) in each of the two components (1, 2), after orientation with respect to one another, lie substantially opposite one another in an end position in which they enclose the gap (3) between them, and that a strip element (5) can be introduced into the groove-like recesses (4) in such a manner that the strip element (5) at least partially projects into both groove-like recesses (4) and, under the action of a force, forms a substantially gastight join with the groove-like recesses (4) in the two components (1, 2), **characterized in that** the material-removing process technology is carried out in at least two successive steps, namely in a first step in which material is removed at a first material-removal rate and in a subsequent second step, in which material is removed at a second material-removal rate, **in that** the first material-removal rate is greater than the second material-removal rate, **in that** the material-removing process technology in the first step produces a machined material surface region (41) with a first surface roughness, **in that** the material-removing process technology in the second step produces a machined material surface region (43) with a second surface roughness, and **in that** the second surface roughness is less than the first.

2. Process according to Claim 1, **characterized in that** the material-removing process technology of the second step is used at least to produce material surface regions (43), within the groove-like recess (4), at which the strip element (5) forms a gastight join with the respective components (1, 2).

3. Process according to Claim 1 or 2, **characterized in that** the groove-like recess (4) has a groove depth along which the groove-like recess (4) has a variable cross section.

4. Process according to Claim 3, **characterized in that** the cross section of the groove-like recess (4) decreases continuously and/or in steps as the groove depth increases.

5. Process according to one of Claims 1 to 3, **characterized in that** grinding, milling, erosion, laser cutting or water-jet cutting is used as the material-removing process technology.

6. Process according to one of Claims 1 to 5, **characterized in that** in the first step an erosive roughing process and in the second step an erosive finishing process is used as the material-removing process technology.

7. Process according to one of Claims 1 to 6, **characterized in that** in the first step an erosion process and in the second step a grinding process is used as the material-removing process technology.

8. Process according to Claim 7, **characterized in that** the erosion process is based on spark erosion.

9. Process according to one of Claims 1 to 8, **characterized in that** the groove-like recess (4) has a minimum groove width which is greater than the thickness (s) of the strip element (5).

10. Process according to one of Claims 1 to 9, **characterized in that** an elastically deformable metal strip is used as strip element (5).

11. Process according to one of Claims 1 to 10, **characterized in that** the material surface region (41) with the first surface roughness adjoins the material surface region (43) with the second surface roughness via a transition region (45), and **in that** the transition region (45) is rounded by means of a material surface-machining process.

12. Process according to Claim 11, **characterized in that** sandblasting, shot peening, high-pressure water blasting, stamping or deforming by means of a ram is used as the material surface-machining process.

13. Groove-like recess which is part of a strip seal between two components (1, 2) which enclose a gap (3) and in which the groove-like recess (4) is formed in such a manner that the groove-like recess (4) in each of the two components (1, 2), after orientation with respect to one another, lie substantially opposite one another in an end position in which they enclose the gap (3) between them, and into which groove a strip element (5) can be introduced in such a manner that the strip element (5) projects at least partially into both groove-like recesses (4) and, under the action of a force, forms a substantially gastight joint with the groove-like recesses (4) in the two components (1, 2), **characterized in that** the groove-like recess (4) has at least one first material surface region (41) with a first surface roughness and at least one second material surface region (43) with a second surface roughness, and **in that** the first surface roughness is less than the second surface roughness.

14. Groove-like recess according to Claim 13, **characterized in that** the material surface region (43) with the second surface roughness is arranged inside the groove-like recess (4) in such a manner that the strip element (5) forms the gastight join with this material surface region.

15. Use of the groove-like recess (4) according to either of Claims 13 and 14 between two components arranged within a turbo machine.

16. Use according to Claim 15, **characterized in that** the turbo machine is a gas turbine installation.

17. Use according to Claim 16, **characterized in that** the components (1, 2) are gas turbine blades or vanes, and the strip seal is used to seal the hot passage within a gas turbine from a cooling-air volume.

18. Use according to Claim 17, **characterized in that** the strip element (5) within the groove-like recess (4) is pressed in a gastight manner onto the respective component (1, 2) by an excess pressure which prevails within the cooling volume compared to the pressure ratios prevailing in the hot passage.

## Revendications

1. Procédé de fabrication d'un évidement (4) en forme de rainure, qui fait partie d'un ruban d'étanchéité entre deux composants (1, 2) renfermant un interstice (3), avec une technique de procédé par enlèvement de matière, pour produire l'évidement (4) en forme de rainure dans les deux composants (1, 2), de telle sorte que les évidements (4) en forme de rainure de chacun des deux composants (1, 2) soient sensiblement en regard après orientation mutuelle dans une position finale renfermant entre eux l'interstice (3), et de telle sorte qu'un élément en ruban (5) puisse être introduit dans les évidements (4) en forme de rainure de telle sorte que l'élément en ruban (5) pénètre au moins en partie dans les deux évidements (4) en forme de rainure et que dans le cas d'une application de force, produise avec les évidements (4) en forme de rainure des deux composants (1, 2) un assemblage essentiellement étanche aux gaz,
**caractérisé en ce que** la technique de procédé par enlèvement de matière est mise en oeuvre dans au moins deux étapes successives, dans lesquelles, dans une première étape, de la matière est enlevée avec une première vitesse d'enlèvement de matière, et dans une deuxième étape suivante, de la matière est enlevée avec une deuxième vitesse d'enlèvement de matière,
**en ce que** la première vitesse d'enlèvement de matière est supérieure à la deuxième vitesse d'enlèvement de matière,
**en ce que** la technique de procédé par enlèvement de matière, conformément à la première étape, produit une région de surface de matière usinée (41) avec une première rugosité de surface,
**en ce que** la technique de procédé par enlèvement de matière, conformément à la première étape, produit une région de surface de matière usinée (43) avec une deuxième rugosité de surface, et **en ce que** la deuxième rugosité de surface est inférieure à la première.

2. Procédé selon la revendication 1,
**caractérisé en ce que** la technique de procédé par enlèvement de matière selon la deuxième étape est utilisée au moins pour produire des régions de surface de matière (43) à l'intérieur de l'évidement (4) en forme de rainure, au niveau desquelles l'élément en ruban (5) produit avec les composants respectifs (1, 2), un assemblage étanche aux gaz.

3. Procédé selon la revendication 1 ou 2,
**caractérisé en ce que** l'évidement (4) en forme de rainure présente une profondeur de rainure le long de laquelle l'évidement (4) en forme de rainure présente une section transversale variable.

4. Procédé selon la revendication 3,
**caractérisé en ce que** la section transversale de l'évidement (4) en forme de rainure devient, continuellement ou par échelons, de plus en plus petite au fur et à mesure de l'augmentation de la profondeur de rainure.

5. Procédé selon l'une quelconque des revendications 1 à 3,
**caractérisé en ce que** l'on utilise comme technique de procédé par enlèvement de matière le meulage, le fraisage, l'érosion, le découpage au laser ou au jet d'eau.

6. Procédé selon l'une quelconque des revendications 1 à 5,
**caractérisé en ce que** l'on utilise comme technique de procédé par enlèvement de matière selon la première étape un procédé de dégrossissage par érosion et dans la deuxième étape un procédé de finition par érosion.

7. Procédé selon l'une quelconque des revendications 1 à 6,
**caractérisé en ce que** l'on utilise comme technique de procédé par enlèvement de matière selon la première étape un procédé d'érosion et dans la deuxième étape un procédé de meulage.

8. Procédé selon la revendication 7,
**caractérisé en ce que** le procédé d'érosion repose sur un procédé d'électroérosion.

9. Procédé selon l'une quelconque des revendications 1 à 8,
**caractérisé en ce que** l'évidement (4) en forme de rainure présente une largeur de rainure minimale, qui est supérieure à l'épaisseur (s) de l'élément en ruban (5).

10. Procédé selon l'une quelconque des revendications 1 à 9,
**caractérisé en ce que** l'on utilise comme élément en ruban (5) un ruban métallique déformable élastiquement.

11. Procédé selon l'une quelconque des revendications 1 à 10,
**caractérisé en ce que** la région de surface de matière (41) ayant la première rugosité de surface est adjacente, par une région de transition (45), à la région de surface de matière (43) ayant la deuxième rugosité de surface, et **en ce que** la région de transition (45) est arrondie au moyen d'un procédé d'usinage de surface de matière.

12. Procédé selon la revendication 11,
**caractérisé en ce que** l'on utilise comme procédé d'usinage de surface de matière un sablage, un grenaillage, un usinage par jets d'eau haute pression, ou un façonnage au moyen d'un poinçon.

13. Evidement en forme de rainure, qui fait partie d'un ruban d'étanchéité entre deux composants (1, 2) renfermant un interstice (3), dans lesquels l'évidement (4) en forme de rainure est incorporé de telle sorte que les évidements (4) en forme de rainure de chacun des deux composants (1, 2) soient sensiblement en regard après orientation mutuelle dans une position finale renfermant entre eux l'interstice (3), et dans lesquels un élément en ruban (5) peut être introduit de telle sorte que l'élément en ruban (5) pénètre au moins en partie dans les deux évidements (4) en forme de rainure et dans le cas d'une application de force, produise avec les évidements (4) en forme de rainure des deux composants (1, 2) un assemblage essentiellement étanche aux gaz,
**caractérisé en ce que** l'évidement (4) en forme de rainure présente au moins une première région de surface de matière (41) avec une première rugosité de surface ainsi qu'au moins une deuxième région de surface de matière (43) avec une deuxième rugosité de surface, et
**en ce que** la première rugosité de surface est inférieure à la deuxième rugosité de surface.

14. Evidement en forme de rainure selon la revendication 13,
**caractérisé en ce que** la région de surface de matière (43) avec la deuxième rugosité de surface est disposée à l'intérieur de l'évidement (4) en forme de rainure de telle sorte que l'élément en ruban (5) produise avec cette région de surface de matière un assemblage étanche aux gaz.

15. Utilisation de l'évidement (4) en forme de rainure selon l'une quelconque des revendications 13 ou 14 entre deux composants disposés à l'intérieur d'une turbomachine.

16. Utilisation selon la revendication 15,
**caractérisée en ce que** la turbomachine est une installation de turbine à gaz.

17. Utilisation selon la revendication 16,
**caractérisée en ce que** les composants (1, 2) sont des aubes de turbine à gaz et le ruban d'étanchéité sert à étancher le conduit chaud à l'intérieur d'une turbine à gaz vis-à-vis d'un volume d'air de refroidissement.

18. Utilisation selon la revendication 17,
**caractérisée en ce que** l'élément en ruban (5) est pressé de manière étanche aux gaz contre le composant respectif (1, 2) par une surpression régnant à l'intérieur du volume de refroidissement par rapport aux conditions de pression régnant dans le conduit chaud, à l'intérieur de l'évidement (4) en forme de rainure.
